# EUROPEAN PATENT APPLICATION

(11) **EP 4 692 282 A1**
(43) Date of publication of application: **11.02.2026**
(21) Application number: 24315378.0
(22) Date of filing: 05.08.2024
(51) Int. Cl.: C10G 2/00, B01J 19/08, C10K 3/02

(54) **PLASMA-ASSISTED FISCHER-TROPSCH PROCESS**

(71) Applicant: TotalEnergies OneTech, 92400 Courbevoie (FR)
(72) Inventor: Le-Gall, Raphaël, 7181 Seneffe (BE); Vandegehuchte, Bart, 7181 Seneffe (BE); Djettene, Rania, 7181 Seneffe (BE); Montroussier, Nicolas, 91120 PALAISEAU (FR)
(74) Representative: Mellet, Valérie Martine

(57) **Abstract**

A Process to produce hydrocarbon from a CO₂-containing stream (13), the process comprising: a) providing a feedstream (11) comprising carbon dioxide and hydrogen, b) performing a Reverse Water-Gas Shift (RWGS) reaction on said feedstream (11) to obtain a syngas (21), c) drying the syngas (21) to obtain a dried syngas (25); and d) submitting the dried syngas (25) to a Fischer-Tropsch Synthesis to form hydrocarbons; wherein step b), the RWGS reaction is performed by plasma catalysis at a temperature below 450°C, wherein the plasma catalysis comprises generating a plasma in one or more dielectric barrier Discharge reactors (5) in the presence of a first catalytic composition (19).

## Description

### Technical field

The present disclosure invention relates to a Fischer-Tropsch process to produce synthetic hydrocarbons, suitable to produce synthetic gasoline (e-gasoline) or synthetic kerosene (e-kerosene).

### Technical background

The growing concern over climate change has underscored the urgent need for innovative solutions to reduce carbon dioxide (CO₂) emissions, one of the primary greenhouse gases contributing to global warming. One promising approach to mitigating CO₂ emissions involves the use of Fischer-Tropsch Synthesis (FTS), a well-established chemical process that converts syngas (a mixture of carbon monoxide and hydrogen) into liquid hydrocarbons. Traditionally, FTS has been employed in the production of synthetic fuels and chemicals, leveraging its ability to generate high-value products from various feedstocks, including natural gas, coal, and biomass. Recent advancements in carbon capture and utilization technologies have opened new avenues for integrating FTS with CO₂ capture systems, transforming captured CO₂ into valuable hydrocarbons rather than releasing it into the atmosphere. This not only addresses the environmental imperative to reduce CO₂ emissions but also provides an economically viable pathway for producing sustainable fuels and chemicals. By utilizing renewable energy sources for hydrogen production and optimizing the FTS process, it is possible to create a closed carbon loop, significantly diminishing the overall carbon footprint.

WO2024/089249 provides a method for producing higher hydrocarbons in a Fischer-Tropsch (FT) reactor by recycling an FT tail-gas comprising: feeding the FT reactor with dry syngas to form liquid hydrocarbons and the FT tail-gas, wherein the dry syngas is obtained by a Reverse Water-Gas Shift (RWGS) reaction of a stream of CO₂ and a stream of H₂ and/or by co-electrolysis of a stream of CO₂ and a stream of H₂O and by a plasma-based treatment of the FT tail-gas.

There is still a need for processes to produce synthetic hydrocarbons that allow for a reduction of the carbon footprint.

### Summary of the disclosure

It has now been found that one or more of the above needs can be fulfilled by the use of plasma catalytic reactions to produce the syngas used in a Fischer-Tropsch process

According to a first aspect, the disclosure provides for a process to produce hydrocarbon from a CO₂-containing stream, the process comprising
a) providing a feedstream comprising carbon dioxide and hydrogen
b) performing a Reverse Water-Gas Shift (RWGS) reaction on said feedstream to obtain a syngas
c) drying the syngas to obtain a dried syngas; and
d) submitting the dried syngas to a Fischer-Tropsch Synthesis (FTS) to form hydrocarbons;
wherein the process is characterized in that in step b), the RWGS reaction is performed by plasma catalysis at a temperature below 450°C, wherein the plasma catalysis comprises generating a plasma in one or more dielectric barrier Discharge (DBD) reactors in the presence of a first catalytic composition.

As it is understood from the definition given, the process provides for an integrated Fischer-Tropsch process wherein the syngas is produced from a CO₂ stream using a plasma-activated RWGS reaction. The process is remarkable in that it allows for full electrification of this part of the process; enables fast start/stop; and requires less heat than conventional solutions.

One or more of the following can be used to further describe the first catalytic composition.

For example, the first catalytic composition comprises at least an active component wherein the active component comprises one or more selected from Ni, Fe, Co, Mo, Cu, Au, Ru, Rh, Re, Pd, Ir, Pt, Mn, La, W, Cr, Zn, Y, Zr, Ag, Li, Na, K, Rb, Cs, Mg, Ca, Ce, La, Sc, Y.

For example, the first catalytic composition comprises an active component comprising one or more metallic compounds selected from:
- one or more non-noble metals selected from Ni, Fe, Co, Mo, Cu, and any mixture thereof;
- one or more noble metals selected from Au, Ru, Rh, Re, Pd, Ir, Pt, and any mixture thereof; and
- one or more bimetallic compounds comprising a non-noble metal and a noble metal wherein the non-noble metal is selected from Ni, Fe, Co, Mo, and Cu, and the noble metal is selected from Au, Ru, Rh, Re, Pd, Ir and Pt;
with preference, the active component of the first catalytic composition comprises Ni and/or Co.

For example, the first catalytic composition comprises a catalyst support selected from ZrO₂, Al₂O₃, MgO, SiOz, Al₂O₃-ZnO, CeO₂, TiO₂, and any mixture thereof; with preference the catalyst support is or comprises Al₂O₃ and/or MgO.

For example, the first catalytic composition comprises one or more selected from Ni/Al₂O₃, Ni/MgO, Ni/SiO₂, Cu/ZnO-Al₂O₃, Cu/SiO₂, Fe/Al₂O₃, Fe/CeO₂, Co/Al₂O₃, CO/SiO₂, CoxOy/MgO, La₁₋ₓSrₓNi_{y}Fe_{y}O_{3+δ}; with preference, selected from Ni/Al₂O₃, Co/Al₂O₃, CoxOy/MgO, and La₁₋ₓSrₓNi_{y}Fe_{y}O_{3+δ}.

In an embodiment, the RWGS reaction by plasma catalysis is performed at a temperature ranging from 150°C to 300°C; preferably from 200°C to 270°C.

In an embodiment, the molar ratio of hydrogen to carbon dioxide in the feed stream is raging from 4:1 to 1:1, preferably from 3:1 to 2:1

In an embodiment, the discharge frequency ranges from 50 to 100 kHz and/or the electrical power supplied ranges from 20 to 40 W.

In an embodiment, step c) drying the syngas is performed by sorbents, membrane separation, condensation, cryogenic distillation, or any combination thereof.

In an embodiment, the drying step further includes a sub-step of adjusting the hydrogen content of the syngas and/or of the dried syngas to obtain a hydrogen-to-carbon monoxide molar ratio of at least 2:1.

In an embodiment, the drying step comprises a step of CO₂ removal; preferably the step of CO₂ removal is performed by condensation or by cryogenic distillation.

In an embodiment, the Fischer-Tropsch Synthesis is performed at a temperature ranging from 200 to 350°C, using a second catalytic composition that comprises at least an active component being or comprising a non-noble metal selected from Ni, Fe, Co, and any mixture thereof: with preference at a temperature ranging from 210 to 260 °C, and/or at a pressure ranging from 2.0 to 3.0 MPa.

In an embodiment, the process further comprises a step e) separating the hydrocarbons obtained in step d) followed by an upgrading step f) comprising a hydro treatment; with preference, the products obtained after the hydrotreatment comprise e-kerosene and/or e-gasoline.

In an embodiment, the process further comprises a step g) of recovering one or more streams comprising one or more from CO₂, CO, H₂, and C₁-C₄ hydrocarbons and submitting it to a conversion reaction to produce a hydrogen-containing stream; with preference, the one or more streams comprises a non-condensable gas stream recovered from the separation step, and/or one or more stream of gaseous products recovered from the upgrading steps.
with preference, the hydrogen-containing stream is recycled into the feedstream provided in step a).

In a preferred embodiment, the conversion step is performed by plasma catalysis at a temperature below 300°C, wherein the plasma catalysis comprises generating a plasma in a dielectric barrier Discharge (DBD) reactor in the presence of a third catalytic composition.

With preference, the third catalytic composition comprises an active component that is a metallic compound that is a non-noble metal selected from Ni, Rh, Pt, and any mixture thereof and/or in that the third catalytic composition comprises a catalytic support that is or comprises Al₂O₃.

According to a second aspect, the disclosure provides for an installation to carry out the process according to the first aspect remarkable in that it comprises, in the following order:
- an RWGS unit comprising at least one plasma catalytic reactor;
- a drying unit; and
- a Fischer-Tropsch synthesis unit comprising one or more reactors;
with preference, the installation further comprises one or more selected from a CO₂-H₂ blending zone, a separation unit, one or more upgrading units, and a conversion unit.

### Description of the figures

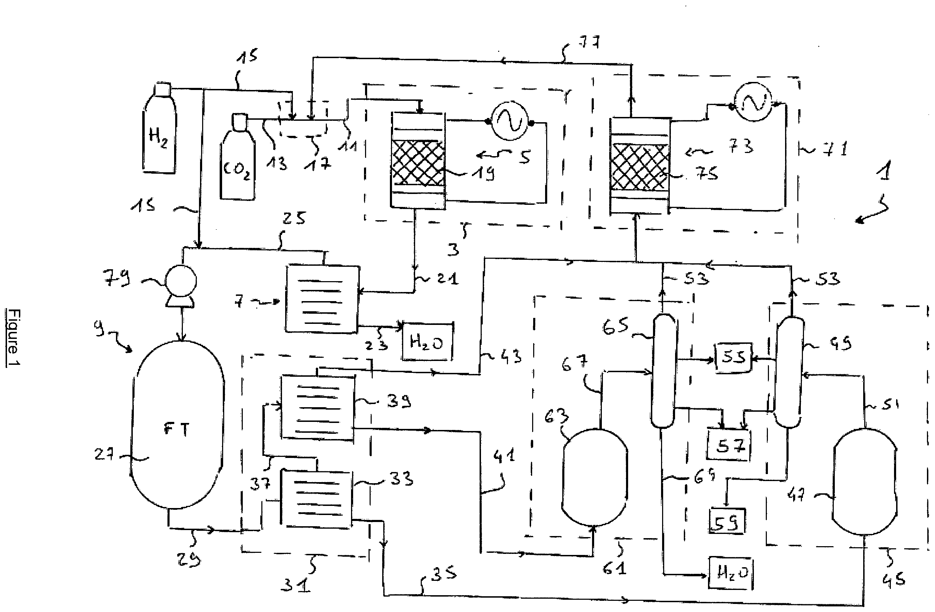

- Figure 1 illustrates an example of installation to conduct the disclosed process

### Detailed description

For the disclosure, the following definitions are given.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of' also include the term "consisting of".

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

As used herein, the term "C# hydrocarbons", wherein "#" is a positive integer, is meant to describe all hydrocarbons having # carbon atoms. C# hydrocarbons are sometimes indicated as just C#. Moreover, the term "C#+ hydrocarbons" is meant to describe all hydrocarbon molecules having # or more carbon atoms. Accordingly, the expression "C10+ hydrocarbons" is meant to describe a mixture of hydrocarbons having 10 or more carbon atoms.

The metals Au, Ag, Ru, Rh, Pd, Os, Ir and Pt show outstanding oxidation resistance and are considered "noble" metals. Other metals can be considered as "non-noble" metals.

The term "alkali metal" refers to an element classified as an element from group 1 of the periodic table of elements (or group IA), excluding hydrogen. According to this definition, the alkali metals are Li, Na, K, Rb, Cs and Fr.

The term "alkaline earth metal" refers to an element classified as an element from group 2 of the periodic table of elements (or group IIA). According to this definition, the alkaline earth metals are Be, Mg, Ca, Sr, Ba and Ra.

The term "rare earth elements" refer to the fifteen lanthanides, as well as scandium and yttrium. The 17 rare-earth elements are cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

The term "DBD- dielectric barrier discharge" describes an electrical discharge created between two electrically conductive elements separated by one or more dielectric elements.

The term "dielectric" describes an electrically insulating material that provides electrical insulation.

The process and the installation to conduct the process will be jointly described with reference to Figure 1.

The present disclosure provides a process to produce hydrocarbon from a CO₂-containing stream 13, the process comprising
a) providing a feedstream 11 comprising carbon dioxide and hydrogen,
b) performing a Reverse Water-Gas Shift (RWGS) reaction on said feedstream 11 to obtain a syngas 21,
c) drying the syngas 21 to obtain a dried syngas 25; and
d) submitting the dried syngas 25 to a Fischer-Tropsch Synthesis (FTS) to form hydrocarbons;
wherein the process is remarkable in that in step b), the RWGS reaction is performed by plasma catalysis at a temperature below 450°C, wherein the plasma catalysis comprises generating a plasma in one or more dielectric barrier Discharge (DBD) reactors 5 in the presence of a first catalytic composition.

The present disclosure provides an installation 1 to perform the process of the disclosure, wherein the installation 1 comprises in the following order:
- a RWGS unit 3 comprising at least one plasma catalytic reactor 5;
- a drying unit 7; and
- a Fischer-Tropsch synthesis unit 9 comprising at least one reactor.

The drying unit is placed downstream from the RWGS unit 3 and the Fischer-Tropsch synthesis unit 9 is placed downstream from the drying unit 7.

### The feedstream and the step a) of providing a feedstream

The feedstream 11 provided in step a) comprises carbon dioxide and hydrogen. The feedstream 11 is gaseous.

In an embodiment the molar ratio of hydrogen to carbon dioxide in the feedstream is ranging from 5:1 to 1:1, preferably from 4:1 to 1:1; more preferably from 3.5:1 to 1.5:1; even more preferably from 3:1 to 2:1

Hydrogen is provided as a hydrogen stream 15 and can be produced by any means known to the skilled person, including electrolysis of water, steam reforming of natural gas followed by a step for pressure Swing adsorption (PSA) separation, or by temperature Swing adsorption (TSA), or by membrane separation.

The CO₂ is provided as CO₂-containing stream 13 can be of any origin and is preferentially obtained by CO₂ capture.

The CO₂-containing stream 13, the hydrogen stream 15, and an optional hydrogen-containing stream 77 are blended directly in the one or more DBD reactors or in an CO₂-H₂ blending zone 17 placed before the one or more DBD reactors. In a preferred embodiment, the different gas stream are blended before being fed into the one or more dielectric barrier Discharge (DBD) reactors 5.

The installation 1 may comprise a CO₂-H₂ blending zone 17 to prepare the feedstream 11. The CO₂-H₂ blending zone 17 can be in the fed lines or can be a blending vessel. In such a case the vessel of the CO₂-H₂ blending zone 17 comprises at least two inputs and one output. A carbon dioxide-containing stream 13 is connected to a first input while a hydrogen stream 15 is connected to a second input. In a preferred embodiment, a third input is provided to recycle a hydrogen-containing stream 77 coming from a conversion unit 71. The feedstream 11 exits the CO₂-hydrogen blending zone 17 through the output and is directed towards an RWGS unit 3 comprising one or more plasma catalytic reactors 5.

### The step b) of performing a Reverse Water-Gas Shift (RWGS) reaction

The Reverse Water-Gas Shift (RWGS) reaction is a chemical process that converts carbon dioxide (CO₂) and hydrogen (H₂) into carbon monoxide (CO) and water (H2O). The reaction is represented by the following equation:

CO₂ + H₂ → CO + H₂O

According to the present disclosure, the RWGS reaction is performed by plasma catalysis at a temperature below 450°C, wherein the plasma catalysis comprises generating a plasma in a dielectric barrier Discharge (DBD) reactor 5 in the presence of a first catalytic composition 19.

For example, the RWGS reaction by plasma catalysis is performed at a temperature ranging from 100°C to 450°C; preferably from 110°C to 400°C; more preferably from 120°C to 350°C, even more preferably from 140°C to 320°C, even more preferably from 150°C to 300°C; even more preferably from 160°C to 290°C; most preferably from 180°C to 280°C, and most preferably from 200°C to 270°C.

For example, the RWGS reaction by plasma catalysis is performed at a temperature of at most 450°C; preferably, at most 400°C; more preferably, at most 350°C, even more preferably, at most 320°C, even more preferably, at most 300°C; even more preferably, at most 290°C; most preferably, at most 280°C, and most preferably, at most 270°C.

For example, the RWGS reaction by plasma catalysis is performed at a temperature of at least 100°C; preferably at least 110°C; more preferably at least 120°C, even more preferably at least 140°C, even more preferably at least 150°C; even more preferably at least 160°C; most preferably at least 180°C, and most preferably at least 200°C.

### The DBD reactor

DBD reactors are well known to the person skilled in the art. An example of a DBD reactor is described in WO2023/037258 which is incorporated by reference.

A dielectric Barrier Discharge (DBD) reactor 5 is an apparatus designed to generate non-thermal plasma. It comprises high-voltage electrodes. A first catalyst composition 19 is placed between the electrodes, allowing the feedstream 11 that is gaseous to contact the catalyst composition 19. The catalyst composition 19 is provided in the form of a fixed bed in a catalyst-holding element that is made of a dielectric material and is inserted in the plasma discharge zone whilst allowing the feedstream 11 to flow through it. The catalyst composition 19 is activated by a plasma generated from high-voltage electrical discharges (of the order of kV).

This polarization gives rise to the formation of plasma, as well as the catalyst composition 19 activation and the RWGS reaction. The product stream obtained in this step is a syngas 21 comprising carbon monoxide, water, carbon dioxide, and hydrogen.

For example, the discharge frequency ranges from 50 to 100 kHz, and/or the electrical power supplied ranges from 20 to 40 W.

### The first catalytic composition

The first catalytic composition comprises at least an active component. For example, the first catalytic composition comprises an active component and a catalytic support.

In an embodiment, the first catalytic composition 19 comprises at least an active component wherein the active component comprises one or more selected from Ni, Fe, Co, Mo, Cu, Au, Ru, Rh, Re, Pd, Ir, Pt, Mn, La, W, Cr, Zn, Y, Zr, Ag, Li, Na, K, Rb, Cs, Mg, Ca, Ce, La, Sc, Y. In an embodiment, the first catalytic composition 19 comprises at least an active component selected from Ni, Fe, Co, Mo, Cu, Au, Ru, Rh, Re, Pd, Ir, Pt, Mn, La, W, Cr, Zn, Y, Zr, Ag, Li, Na, K, Rb, Cs, Mg, Ca, Ce, La, Sc, Y, and any mixture thereof.

For example, the first catalytic composition 19 comprises at least an active component comprising a metallic compound selected from: Ni, Fe, Co, Mo, Cu, Au, Ru, Rh, Re, Pd, Ir, Pt, Mn, La, W, Cr, Zn, Y, Zr, Ag, and any mixture thereof; with preference, Ni, Fe, Co, Mo, Cu, Au, Ru, Rh, Re, Pd, Ir, Pt, and any mixture thereof.

In an embodiment, the first catalytic composition 19 comprises at least an active component comprising a metallic compound selected from Mn, La, W, Cr, Zn, Y, Zr, Ag, and any mixture thereof.

In n embodiment, the first catalytic composition 19 comprises at least an active component comprising a metallic compound selected from:
- one or more non-noble metals selected from Ni, Fe, Co, Mo, Cu, and any mixture thereof;
- one or more noble metals selected from Au, Ru, Rh, Re, Pd, Ir, Pt, and any mixture thereof; and
- one or more bimetallic compounds comprising a non-noble metal and a noble metal wherein the non-noble metal is selected from Ni, Fe, Co, Mo, and Cu, and the noble metal is selected from Au, Ru, Rh, Re, Pd, Ir, and Pt.

For example, the one or more non-noble metals selected from Ni, Fe, Co, Mo, Cu and any mixture thereof are present in an amount ranging between 0.05 wt.% and 20.00 wt.% based on the total weight of the first catalytic composition, preferably between 0.10 wt.% and 15.00 wt.%, more preferably between 0.50 wt.% and 10.00 wt.%, even more preferably between 1.00 wt.% and 5.00 wt.%.

For example, the one or more non-noble metals are or comprise Ni and/or Co.

For example, the one or more noble metals selected from Au, Ru, Rh, Re, Pd, Ir, Pt and any mixture thereof are present in an amount ranging between 0.05 wt.% and 10.00 wt.% based on the total weight of the first catalytic composition, preferably between 0.10 wt.% and 5.00 wt.%, more preferably between 1.00 wt.% and 3.00 wt.%, even more preferably between 1.50 wt.% and 2.50 wt.%.

For example, the one or more noble metals are or comprise Ru, preferably in an amount ranging between 0.05 wt.% and 10.00 wt.% based on the total weight of the first catalytic composition.

In a preferred embodiment, the active component of the first catalytic composition comprises Ni and/or Co.

With preference, the first catalytic composition comprises one or more composite oxides selected from:
- CuO/ZnO/Al₂O₃, NiO/CeO₂, ZnO/Al₂O₃, ZnO/Cr₂O₃, CuOₓ/CeO₂, In₂O₃-CeO₂, FeOₓ, CoₓO_{y}, CoₓO_{y}/MgO, or any combinations thereof;
- spinel oxides such as ZnAl₂O₄, ZnCr₂O₄, CuAl₂O₄, CoAl₂O₄, or any combinations thereof;
- solid solution oxides, such as ZnₓZr₁₋ₓO_{2-y}, CeₓZr₁₋ₓO_{2-y}, or any combinations thereof (wherein x is ranging between 0 and 0.5 and/or wherein y is ranging between 0 and 0.5)
- and perovskite-type oxides, such as BaZr_{1-x-y}YₓZn_{y}O_{3-δ}, La₁₋ₓSrₓCoO_{3-δ}, La₁₋ₓSrₓFeO_{3-δ}, LaNiO3, La₁₋ₓSrₓNiO_{3+δ}, La₁₋ₓSrₓFeO_{3-δ}, SrCe₁₋ₓYₓO_{3-δ}, La₁₋ₓSrₓNi_{y}Fe_{y}O_{3+δ}, or any combinations thereof (wherein x is ranging between 0 and 0.5 and/or wherein y is ranging between 0 and 0.5 and/or wherein d is ranging between 0 and 0.5).

In an embodiment, the first catalyst composition comprises CoₓO_{y}/MgO, La₁₋ₓSrₓNi_{y}Fe_{y}O_{3+δ}, or any mixture thereof; preferably wherein La₁₋ₓSrₓNi_{y}Fe_{y}O_{3+δ}, is La_{0.9} Sr_{0.1} Ni_{0.5} Fe_{0.5} O_{3+δ}.

In an embodiment, the first catalytic composition 19 comprises at least an active component comprising a compound selected from Li, Na, K, Rb, Cs, Mg, Ca, Ce, La, Sc, Y, and any mixture thereof.

Advantageously, said first catalytic composition 19 further comprises one or more elements selected from one or more selected from alkali metals, alkaline earth metals, and rare earth elements. For example, one or more alkali metals are one or more selected from Li, Na, K, Rb, Cs, and any mixture thereof; with preference, Li, Na, K, Cs, and any mixture thereof. For example, one or more alkaline earth metals are one or more selected from Mg and/or Ca. For example, one or more rare earth elements are one or more selected from Ce, La, Sc, Y, and any mixture thereof. More preferably, the first catalytic composition comprises Ce.

For example, the active component of the first catalytic composition comprises Ce and one selected from Ni, Co, and any mixture thereof.

With preference, said first catalytic composition further comprises a catalytic support.

Suitable particulate catalytic supports can be selected from refractory oxides such as alumina (Al₂O₃, g-Al₂O₃, b-Al₂O₃, h-Al₂O₃, d-Al₂O₃, amorphous Al₂O₃), silica (SiO₂), titania (TiO₂), ceria (CeO₂), zirconia (ZrO₂), magnesia (MgO), yttria (Y₂O₃), hafnia (HfO₂), lanthania (La₂O₃), niobium oxide (Nb₂O₃), tungsten oxide and any mixture thereof.

Suitable particulate catalytic supports can be selected from mixed oxides such as SiO₂-Al₂O₃, SiO₂-TiO₂, SiO₂-SnO₂, SiO₂-ZrO₂, SiO₂-BeO, SiO₂-MgO, SiO₂-CaO, SiO₂-SrO, SiO₂-ZnO, SiO₂-Ga₂O₃, SiO₂-Y₂O₃, SiO₂-La₂O₃, SiO₂-WO₃, SiO₂-ThO₂, Al₂O₃-MgO, Al₂O₃-ZnO, Al₂O₃-ThO₂, Al₂O₃-TiO₂, Al₂O₃-ZrO₂, Al₂O₃-MoO₃, Al₂O₃-WO₃, Al₂O₃-Cr₂O₃, Al₂O₃-Mn₂O₃, Al₂O₃-Fe₂O₃, TiO₂-MgO, TiO₂-ZnO, TiO₂-ZrO₂, TiO₂-SnO₂, TiO₂-Sb₂O₅, TiO₂-V₂O₅, TiO₂-Cr₂O₃, TiO₂-MoO₃, TiO₂-WO₃, WO₃-ZrO₂, Nb₂O₅-Al₂O₃, Nb₂O₅-WO₃, Nb₂O₅-MoO₃, Nb₂O₅-ZrO₂, Nb₂O₅-TiO₂, TiO₂-Fe₂O₃, CeO₂-ZrO₂, MgAl₂O₃, CaAl₂O₃ and mixtures thereof.

Suitable particulate catalytic supports for the metallic compounds can be selected from one or more carbon-containing carriers, such as graphite, graphene, carbon nanotubes, char, charcoal, black carbon, petcoke, siliconcarbide, boroncarbide, ironcarbide (FeₓC), molybdynum carbide (MoₓC), titaniumcarbide (TiC) and or mixtures thereof.

Suitable catalytic support can be selected from zeolites or molecular sieves having 8, 10 or 12-membered rings. With preference, the one or more zeolites or molecular sieves are selected from CHA (such as chabazite, SAPO-34), ERI (erionite), FAU (such as zeolite Y, X or USY), BEA (such as zeolite beta), MFI (such as ZSM-5), MEL (such as ZSM-11), MOR (such as mordenite), FER (such as ferrierite), MTT, MWW, TON, EUO, HEU, MFS, and MRE families, and any combinations thereof.

For example, the catalyst support is selected from ZrO₂, Al₂O₃, MgO, SiO₂, Al₂O₃-ZnO, CeO₂, TiO₂, and any mixture thereof. With preference, the catalyst support is or comprises CeO₂, Al₂O₃, MgO, and any mixture thereof. More preferably, the catalyst support is or comprises Al₂O₃.

In an embodiment, the first catalyst composition 19 consists in or comprises one or more selected from Ni/Al₂O₃, Ni/MgO, Ni/SiO₂, Cu/ZnO-Al₂O₃, Cu/SiO₂, Fe/Al₂O₃, Fe/CeO₂, Co/Al₂O₃, Co/SiO₂, Ru/Al₂O₃, Ru/TiO₂, Pd/CeO₂, Pd/Al₂O₃, Au/TiO₂, Au/CeO₂, Pt/Al₂O₃, Pt/CeO₂, Re/Al₂O₃, Re/CeO₂. Preferably, the first catalyst composition consists in or comprises one or more selected from Ni/Al₂O₃, Ni/MgO, Ni/SiO₂, Cu/ZnO-Al₂O₃, Cu/SiO₂, Fe/Al₂O₃, Fe/CeO₂, Co/Al₂O₃, Co/SiO₂. More preferably, the first catalyst composition consists in or comprises one or more selected from Co/Al₂O₃, Ni/Al₂O₃, and any mixture thereof.

With preference, said first catalytic composition 19 further comprises a specific surface area ranging between 10 m²/g and 1000 m²/g as determined by N₂ adsorption measurement, more preferably between 50 m²/g and 900 m²/g, even more preferably between 100 m²/g and 800 m²/g, most preferably between 200 m²/g and 700 m²/g.

Examples of suitable catalysts are described in the below references, which are all incorporated by reference:
- Liu et al. in "Low temperature catalytic reverse water-gas shift reaction over perovskite catalysts in DBD plasma" - Applied Catalysis B: Environmental 265 (2020) 11857.
- Yuxuan Zeng and Xin Tu in "Plasma-catalytic hydrogenation of CO2 for the cogeneration of CO and CH4 in a dielectric barrier discharge reactor: effect of argon addition" - 2017 J. Phys. D: Appl. Phys. 50 184004.
- Ronda-Lioret et al in "CO2 Hydrogenation at Atmospheric Pressure and Low Temperature Using Plasma-Enhanced Catalysis over Supported Cobalt Oxide Catalysts) - ACS Sustainable Chem. Eng. 2020, 8, 47, 17397-17407.

### The step c) of drying the syngas to produce a dried syngas

The syngas 21 obtained from the RWGS reaction comprises water 23 and therefore must be dried before being subjected to the Fischer-Tropsch Synthesis reaction. The drying of the syngas 21 to obtain a dried syngas 25 can be done by any means, in a drying unit 7.

In an embodiment, the drying step is performed by sorbents, membrane separation, condensation, cryogenic distillation, or any combination thereof.

Any suitable sorbent capable of adsorbing water can be used. Silica, silica gel, or molecular sieves such as 13X or any mixture thereof can for instance be used to dry the syngas.

In a preferred embodiment, the step of drying is performed until the content of water is at most 5.0 vol.%, preferably at most 3.0 vol.%, more preferably at most 1.0 vol.% of H₂O based on the total volume of the dried syngas 25.

In an embodiment, the drying step comprises a step of CO₂ removal. The drying step and the CO₂ removal step (i.e. the purification step) are preferably done consecutively (in successive sub-steps). An example of a process of drying and purification of syngas by CO₂ removal by cryogenic distillation is described in WO2006079736 which is incorporated by reference. When the step of CO₂ removal is performed, the CO₂ recovered is preferably recycled in the feedstream 11.

In an embodiment, the drying step further includes a sub-step of adjusting the hydrogen content of the syngas 21 and/or of the dried syngas 25 to obtain a hydrogen-to-carbon monoxide molar ratio of at least 2:1. Adjusting the content can be obtained by adding hydrogen to the syngas 21 and/or of the dried syngas 25.

In a preferred embodiment, the drying step further includes a sub-step of adjusting the pressure the syngas 21 and/or of the dried syngas 25 before entering the Fischer-Tropsch unit 9. The pressure is preferably adjusted to range from 0.1 to 5.0 MPa, preferably from 0.5 to 4.5 MPa, more preferably from 1.0 to 4.0 MPa, even more preferably from 1.5 to 3.5 MPa, and most preferably from 2.0 to 3.0 MPa. In such a case the installation further comprises at least one compressor 79 that is placed upstream of the Fischer Tropsch unit 9.

The dried syngas 25 is then fed to the Fischer-Tropsch unit 9 comprising one or more reactors.

### The step d) of Fischer-Tropsch Synthesis (FTS)

The Fischer-Tropsch reaction (also named Fischer-Tropsch Synthesis) converts carbon monoxide and hydrogen (syngas) into longer chains, usually paraffinic, hydrocarbons. The reaction is globally exothermic. The overall reaction equation is straightforward (but hides mechanistic complexity):

n(CO + 2H₂) → (-CH2-)n +nH₂O + heat

The dried syngas 25 is therefore converted mainly into hydrocarbons (i.e. paraffins) by the Fischer-Tropsch synthesis in presence of a second catalytic composition 27.

The Fischer-Tropsch synthesis reaction can be carried out in various types of reactors (fixed-bed, mobile, or three-phase (gas, liquid, solid) for example perfectly stirred autoclave or slurry bubble column type), and the reaction products have in particular the characteristic of being free of sulfur-comprising, nitrogenous or aromatic-type compounds.

In one embodiment in a reactor of slurry bubble column type (or else "slurry" type in a simplified expression), a divided catalyst in the form of a very fine powder, typically about a few tens of micrometers, is implemented, this powder forming a suspension with the reaction medium.

In an embodiment, the Fischer-Tropsch reaction is carried out at a pressure ranging between 0.5 and 10.0 MPa (5 and 100 bar), preferably between 1.0 and 6.0 MPa, more preferably between 1.2 and 5.0 MPa, more preferably between 2.0 and 4.5 MPa, even more preferably between 2.0 and 3.0 MPa.

In an embodiment, the Fischer-Tropsch reaction is carried out at a temperature ranging from 150 to 400°C; preferably ranging from 180 to 380°C; more preferably from 200 to 350°C, even more preferably, from 210 to 300°C, most preferably, from 210 to 280°C; and even most preferably, from 210 to 260°C.

The second catalytic composition comprises at least an active component. For example, the second catalytic composition comprises an active component and a catalytic support.

In an embodiment, the second catalytic composition 27 comprises at least an active component comprising at least one element from group VIII and/or at least one element from group VIB of the periodic classification of the elements (group VIII corresponds to groups 8, 9, and 10 and group VIB to group 6 in the new notation of the periodic classification of the elements: Handbook of Chemistry and Physics, 81 edition, 2000-2001). With preference, the active element comprises at least one metal selected from Ni, Fe, Co, and any mixture thereof. For example, the active phase comprises iron (Fe) or cobalt (Co). In an embodiment, the non-noble metal of the active phase is doped with a noble metal such as Pt, Rh, or Ru.

With preference, said second catalytic composition 27 further comprises a catalytic support. For example, the catalyst support is selected from Al₂O₃-SiO₂, Al₂O₃, MgO, SiO₂, Al₂O₃-ZnO, CeO₂, TiO₂, ZrO₂, and any mixture thereof. With preference, the second catalystic support is selected from Al₂O₃-SiO₂, Al₂O₃, SiO₂, and any mixture thereof.

An example of catalyst composition suitable for the Fischer-Tropsch reaction is described in EP3643767 which is incorporated by reference.

The choice of the catalyst and the reaction conditions such as the temperature conditions influence the products obtained. At preferred temperatures from about 200 °C to about 230 °C, the mainly higher hydrocarbons produced can advantageously become kerosene, diesel, or other higher hydrocarbons after upgrading step.

Thus, in a preferred embodiment, the process further comprises a step e) separating the hydrocarbons obtained in step d) followed by an upgrading step f). Indeed, the hydrocarbons can subsequently be converted into fuels in one or more upgrading steps by a hydroisomerization-hydrocracking process. For example, conversion processes such as hydrocracking, deparaffinizing, and hydroisomerization of heavy (C16+) cuts make it possible to produce various types of fuels in the middle-distillate range: gas oil (180-370° C. cut) and kerosene (140-300° C. cut). The lighter, C5-C15, fractions can be distilled and used as solvents.

### The separation step e)

The hydrocarbons, obtained in step d), are recovered as the first Fischer-Tropsch product stream 29 and are then separated in a separation unit 31 in at least one separation step, preferably at least two separation steps.

For example, the first Fischer-Tropsch product stream 29 is subjected to a first separation step comprising a condensation of heavy hydrocarbons followed by a phase separation. This first separation step is also named the "hot trap". The first separation step is used to separate and collect high-boiling-point products and heavier hydrocarbons from the first Fischer-Tropsch product stream 29. These products are typically waxes and heavier hydrocarbons (C20+). The first separation step is performed in a wax separator 33 (i.e. a high-temperature condenser) that operates at high temperatures (e.g., 150-300°C) to keep heavier hydrocarbons in the liquid phase.

The first separation step results in a Fischer-Tropsch wax stream 35 comprising waxes and C20 + hydrocarbons and in a second Fischer-Tropsch product stream 37.

The second Fischer-Tropsch product stream 37 can then be submitted to a second separation step comprising a condensation of light hydrocarbons and water. This second separation step is also named the "cold trap". The second separation step is used to separate and collect lower-boiling-point products and lighter hydrocarbons, including water, light oils, and other volatiles from the gas stream exiting the hot trap. The second separation step is performed in a light ends condenser 39 (i.e. a low-temperature condenser) that operates at much lower temperatures (e.g., -20 to 50°C) to condense light hydrocarbons and water vapor.

The second separation step results in a third Fischer-Tropsch product stream 41 comprising C₁-C₁₉ hydrocarbons and water and in a non-condensable gas stream 43 comprising unreacted H₂, CO, CO₂, and some gaseous C₁-C₄ hydrocarbons. The third Fischer-Tropsch product stream 41 may be dried by phase separation to obtain a dry third Fischer-Tropsch product stream.

In an embodiment, the non-condensable gas stream 43 is recycled in a conversion unit 71 comprising one or more reactors.

In an embodiment, the Fischer-Tropsch wax stream 35 and/or the third Fischer-Tropsch product stream 41 (or the dry third Fischer-Tropsch product stream) are submitted to an upgrading step.

### The upgrading step f)

In an embodiment, the Fischer-Tropsch wax stream 35 is subjected to an upgrading step comprising at least one of hydrocracking, hydrotreatment, isomerization, or distillation and fractionation (to separate them into specific boiling point ranges). The upgrading step of the Fischer-Tropsch wax stream 35 is conducted in a first upgrading unit 45; with preference the first upgrading unit 45 comprises at least one reactor 47 and a distillation unit 49 comprising at least one distillation column.

Upgrading steps are known to the person skilled in the art. For example, hydrotreatment involves hydrocracking to adjust the boiling range and/or hydroisomerization which can improve cold flow properties by increasing the proportion of branched paraffins.

For example, to produce kerosene, the Fischer-Tropsch wax stream 35 may be submitted to a hydrocracking process in a reactor 47 that breaks down long-chain hydrocarbons (waxes and heavy paraffins) into shorter, more valuable hydrocarbons, including middle distillates such as kerosene. After hydrocracking, the product stream 51 may undergo hydrotreating to remove impurities such as oxygen compounds (which improve the quality of kerosene). The product stream 51 or the hydrotreated product stream is then subjected to distillation and fractionation in the distillation unit 49 to separate the products into specific boiling point ranges.

An example of two-step hydrotreatment process is provided in EP0583836.

Typically, the distillation results in a stream of gaseous products 53 such as light hydrocarbons (C₁-C₄), a naphta stream 55 (that can be used for gasoline production or as a feedstock for petrochemical processes), a middle-distillates stream 57 (comprising kerosene, diesel, and jet fuel), and a base oils stream 59 that comprise lubricating oils.

In an embodiment, the third Fischer-Tropsch product stream 41 (or the dry third Fischer-Tropsch product stream) is subjected to an upgrading step comprising at least one of hydrotreatment, isomerization, alkylation, reforming, or distillation and fractionation (to separate them into useful fractions). The upgrading step of the third Fischer-Tropsch product stream 41 is conducted in a second upgrading unit 61; with preference, the second upgrading unit 61 comprises at least one reactor 63 and a distillation unit 65 comprising at least one distillation column.

For example, the third Fischer-Tropsch product stream 41 (or the dry third Fischer-Tropsch product stream) may be submitted to a hydrotreatment process in a reactor 63. The product stream 67 is then sent to a distillation unit 65 to be subjected to distillation and fractionation, resulting in a stream of gaseous products 53 such as light hydrocarbons (C₁-C₄), a naphta stream 55 (that can be used for gasoline production or as a feedstock for petrochemical processes), a middle distillates stream 57 (comprising kerosene, diesel, and jet fuel), and water 69.

The C₁-C₄ hydrocarbons in the stream of gaseous products 53 can be recycled in a conversion unit 71 comprising one or more reactors, for example after being blended with the non-condensable gas stream 43.

### The step q) of conversion

The process may include the recycling of the unreacted CO₂, CO H₂, and the C₁-C₄ hydrocarbons, this allows for increasing carbon efficiency and limits the CO₂ demand and emissions. For example, the process further comprises a step g) of recovering one or more streams (43, 53) comprising one or more from CO₂, CO, H₂, and C₁-C₄ hydrocarbons and submitting it to a conversion reaction to produce a hydrogen-containing stream 77; with preference, the one or more streams comprises a non-condensable gas stream 43 recovered from the separation step, and/or one or more stream of gaseous products 53 recovered from the upgrading steps.

The recycling includes a step conversion of the C₁-C₄ hydrocarbons in a conversion unit 71 comprising one or more reactors 73. With preference, the one or more reactors 73 are dielectric barrier Discharge (DBD) reactors 73 comprising a third catalytic composition 75.

In the conversion step, the conversion of C₁-C₄ hydrocarbons can be made by steam reforming, dry reforming, partial oxidation, auto thermal reforming, plasma catalytic reforming, catalytic cracking, and any combination thereof.

Steam reforming involves reacting C₁-C₄ hydrocarbons with steam (H₂O) at high temperatures (700°C to 1100°C) in the presence of a catalyst such as a nickel-based catalyst. Dry reforming comprises C₁-C₄ hydrocarbons to be reacted with carbon dioxide (CO₂) at high temperatures (800°C to 1000°C) using a catalyst such as a nickel-based or a noble metal catalyst. The partial oxidation of C₁-C₄ hydrocarbons with oxygen (O₂) at high temperatures (800°C to 1200°C), often using a catalyst such as a noble metal catalyst. Auto thermal reforming combines steam reforming and partial oxidation in a single reactor. The heat generated by partial oxidation is used to drive the endothermic steam reforming reaction. Catalytic cracking involves breaking down larger hydrocarbon molecules into smaller ones, including CO and CO₂, using a catalyst at elevated temperatures.

With preference, to reduce the overall heat demand of the process, the conversion is performed by plasma catalytic reforming. An example of such a process of plasma catalytic reforming is described in WO2023/170560 which is incorporated by reference.

Thus, in an embodiment, the conversion step is performed by plasma catalysis at a temperature below 300°C, wherein the plasma catalysis comprises generating a plasma in a dielectric barrier Discharge (DBD) reactor 73 in the presence of a third catalytic composition 75.

The third catalytic composition comprises at least an active component. For example, the third catalytic composition comprises an active component and a catalytic support.

With preference, the third catalytic composition 75 comprises an active component being a metallic compound that is or comprises a non-noble metal selected from Ni, Rh, Pt, and any mixture thereof; with preference, the active component is or comprises Ni.

For example, the catalyst support is selected from Al₂O₃, MgO, SiO₂, Al₂O₃-ZnO, CeO₂, TiO₂ and any mixture thereof. With preference, the catalyst support is or comprises CeO₂, Al₂O₃, MgO and any mixture thereof. More preferably, the catalyst support is or comprises Al₂O₃.

In a preferred embodiment, the catalyst support is or comprises a mixture of CeO₂-Al₂O₃

Examples of suitable catalysts are described in Marinho, et al. in "Highly active and stable Ni dispersed on mesoporous CeO2-Al2O3 catalysts for production of syngas by dry reforming of methane" Applied Catalysis B: Environmental 281 (2021) 119459, which are incorporated by reference.

## Claims

1. Process to produce hydrocarbon from a CO₂-containing stream (13), the process comprising:
a) providing a feedstream (11) comprising carbon dioxide and hydrogen,
b) performing a Reverse Water-Gas Shift (RWGS) reaction on said feedstream (11) to obtain a syngas (21),
c) drying the syngas (21) to obtain a dried syngas (25); and
d) submitting the dried syngas (25) to a Fischer-Tropsch Synthesis (FTS) to form hydrocarbons;
wherein the process is **characterized in that** in step b), the RWGS reaction is performed by plasma catalysis at a temperature below 450°C, wherein the plasma catalysis comprises generating a plasma in one or more dielectric barrier Discharge (DBD) reactors (5) in the presence of a first catalytic composition (19).

2. The process according to claim 1 is **characterized in that** the first catalytic composition (19) comprises at least an active component wherein the active component comprises one or more selected from Ni, Fe, Co, Mo, Cu, Au, Ru, Rh, Re, Pd, Ir, Pt, Mn, La, W, Cr, Zn, Y, Zr, Ag, Li, Na, K, Rb, Cs, Mg, Ca, Ce, La, Sc, Y;
with preference, the active component of the first catalytic composition (19) comprises Ni and/or Co.

3. The process according to claim 1 or 2 is **characterized in that** the first catalytic composition (19) comprises a catalyst support selected from ZrO₂, Al₂O₃, MgO, SiO₂, Al₂O₃-ZnO, CeO₂, TiO₂, and any mixture thereof; with preference the catalyst support is or comprises Al₂O₃ and/or MgO.

4. The process according to any one of claims 1 to 3 is **characterized in that** the first catalytic composition (19) comprises one or more selected from Ni/Al₂O₃, Ni/MgO, Ni/SiO₂, Cu/ZnO-Al₂O₃, Cu/SiO₂, Fe/Al₂O₃, Fe/CeO₂, Co/Al₂O₃, Co/SiO₂, CoₓO_{y}/MgO, La₁₋ₓSrₓNi_{y}Fe_{y}O_{3+δ}; with preference, selected from Ni/Al₂O₃, Co/Al₂O₃, CoₓO_{y}/MgO, and La₁₋ₓSrₓNi_{y}Fe_{y}O_{3+δ}.

5. The process according to any one of claims 1 to 4 is **characterized in that** the RWGS reaction by plasma catalysis is performed at a temperature ranging from 150°C to 300°C; preferably from 200°C to 270°C.

6. The process according to any one of claims 1 to 5 is **characterized in that** the molar ratio of hydrogen to carbon dioxide in the feedstream ranges from 4:1 to 1:1, preferably from 3:1 to 2:1

7. The process according to any one of claims 1 to 6 is **characterized in that** the discharge frequency ranges from 50 to 100 kHz and/or the electrical power supplied ranges from 20 to 40 W.

8. The process according to any one of claims 1 to 7 in that step c) drying the syngas is performed by sorbents, membrane separation, condensation, cryogenic distillation, or any combination thereof; and/or in that the drying step further includes a sub-step of adjusting the hydrogen content of the syngas (21) and/or of the dried syngas (25) to obtain a hydrogen-to-carbon monoxide molar ratio of at least 2:1.

9. The process according to any one of claims 1 to 8 is **characterized in that** the Fischer-Tropsch Synthesis is performed at a temperature ranging from 200 to 350°C, using a second catalytic composition (27) that comprises at least an active component comprising a non-noble metal selected from Ni, Fe, Co, and any mixture thereof: with preference at a temperature ranging from 210 to 260 °C and/or at a pressure ranging from 2.0 to 3.0 MPa.

10. The process according to any one of claims 1 to 9 is **characterized in that** the process further comprises a step e) separating the hydrocarbons obtained in step d) followed by an upgrading step f) comprising a hydro treatment; with preference, the products obtained after the hydrotreatment comprise e-kerosene and/or e-gasoline.

11. The process according to claim 10 is **characterized in that** the process further comprises a step g) of recovering one or more streams (43, 53) comprising one or more from CO₂, CO, H₂, and C₁-C₄ hydrocarbons and submitting it to a conversion reaction to produce a hydrogen-containing stream (77); with preference, the one or more streams comprises a non-condensable gas stream (43) recovered from the separation step, and/or one or more stream of gaseous products (53) recovered from the upgrading steps.

12. The process according to claim 11 is **characterized in that** the hydrogen-containing stream (77) is recycled into the feedstream (11) provided in step a).

13. The process according to claims 11 or 12 is **characterized in that** the conversion step is performed by plasma catalysis at a temperature below 300°C, wherein the plasma catalysis comprises generating a plasma in a dielectric barrier Discharge (DBD) reactor (73) in the presence of a third catalytic composition (75).

14. The process according to claim 13 is **characterized in that** the third catalytic composition (75) comprises an active component being a metallic compound that is a non-noble metal selected from Ni, Rh, Pt and any mixture thereof and/or **in that** the third catalytic composition comprises a catalytic support that is or comprises Al₂O₃.

15. Installation (1) to carry out the process according to any one of the preceding claims **characterized in that** it comprises, in the following order:
- an RWGS unit (3) comprising at least one plasma catalytic reactor (5);
- a drying unit (7); and
- a Fischer-Tropsch synthesis unit (9) comprising one or more reactors;
with preference, the installation (1) further comprises one or more selected from a CO₂-H₂ blending zone (17), a separation unit (31), one or more upgrading units (45, 61), and a conversion unit (71).
